# FASCICULE DE BREVET EUROPEEN

(11) **EP 4 108 408 B1**
(45) Date de publication et mention de la délivrance du brevet: **17.04.2024**
(21) Numéro de dépôt: 22179976.0
(22) Date de dépôt: 20.06.2022
(51) Int. Cl.: B29C 45/00, B65D 39/00, B29K 711/02, B65D 51/16

(54) **BOUCHON PRÉSENTANT UN CONTRÔLE DE LA PERMÉABILITÉ AUX GAZ ET PROCÉDÉ DE FABRICATION CORRESPONDANT**
KORKEN MIT EINER KONTROLLE DER GASDURCHLÄSSIGKEIT UND ENTSPRECHENDES HERSTELLUNGSVERFAHREN
PLUG WITH CONTROL OF GAS PERMEABILITY AND CORRESPONDING MANUFACTURING METHOD

(30) Priorité: 24.06.2021 FR 2106756
(43) Date de publication de la demande: 28.12.2022
(73) Titulaire: DIAM BOUCHAGE, 66400 Ceret (FR)
(72) Inventeur: GALY, Nicolas, 66400 CERET (FR); TIXADOR, Dimitri, 66110 AMÉLIE-LES BAINS (FR); SALES, Daniel, 66330 CABESTANY (FR); LOISEL, Christophe, 66180 VILLENEUVE DE LA RAHO (FR)
(74) Mandataire: Casalonga

(56) Documents cités:
- EP-A1- 0 629 559
- WO-A1-2007/135552
- FR-A1- 2 697 504
- FR-A1- 2 885 882
- IT-A1- MN20 100 013
- US-A1- 2004 074 862
- US-A1- 2008 277 372
- US-B1- 6 601 722

## Description

### Domaine technique

L'invention a pour domaine technique les bouchons en liège, et plus particulièrement, de tels bouchons permettant de contrôler les échanges de gaz entre une bouteille et son environnement.

### Techniques antérieures

Le liège est un matériau naturel, imperméable et léger, qui provient de l'écorce de certaines espèces de chênes, telles que les chênes-lièges, qui se trouvent typiquement dans les pays du pourtour méditerranéen, en Europe et en Afrique du Nord.

Le liège trouve notamment son utilisation dans la fabrication de bouchons, qui servent à boucher des récipients tels que des bouteilles contenant des liquides destinés à l'alimentation, en particulier, du vin tranquille ou effervescent, de spiritueux ou d'autres boissons. Les bouchons sont produits soit par tubage de planches de liège, soit par reconstitution en utilisant du liège broyé et tamisé avec des polymères.

Le liège est un matériau élastique, résilient, comprimable, imperméable aux liquides et présentant un fort coefficient de friction. Sa structure offre une perméabilité aux gaz permettant l'échange d'oxygène utile à la maturation du produit en bouteille. La structure des bouchons en liège issue de tubage, est toutefois très hétérogène entraînant la variabilité du passage d'oxygène.

Les bouchons micro-agglomérés présentent des structures beaucoup plus homogènes que les bouchons naturels tubés qui limitent leurs perméabilités à des valeurs basses. Aujourd'hui, par la formulation de ces bouchons, il n'est pas possible d'augmenter les valeurs de perméabilité aux gaz sans augmenter l'hétérogénéité. De ce fait, il n'existe pas de bouchon ayant une perméabilité aux gaz plus élevée et contrôlée avec une faible variabilité d'un bouchon à un autre.

Il existe donc un besoin pour un bouchon en liège présentant une plus faible variabilité de perméabilité aux gaz d'un bouchon à l'autre que les bouchons micro-agglomérés ou que les bouchons en liège directement produits par tubage. Il existe également un besoin pour un contrôle plus fin de la perméabilité aux gaz par rapport aux perméabilités accessibles aujourd'hui.

Il existe également un besoin pour un procédé de fabrication de bouchons en liège permettant l'obtention de bouchons en liège présentant une perméabilité choisie dans une gamme de valeur prédéfinie et présentant une faible variabilité de la perméabilité d'un bouchon à l'autre.

Des bouchons en liège présentant une perméabilité contrôlée aux gaz de sorte à contrôler la quantité de gaz circulant à travers le bouchon sont décrites dans les documents US2008/277372 et ITMN20100013.

### Exposé de l'invention

L'invention a pour objet un bouchon pour boucher une bouteille, comprenant deux faces opposées et une surface latérale de sorte à pouvoir être inséré en force dans le col de la bouteille, et dans lequel est ménagé au moins un canal percé entre les deux faces opposées du bouchon, de sorte à mettre en communication l'intérieur et l'extérieur de la bouteille. Le au moins un canal est rempli d'un matériau imperméable aux liquides, présentant une perméabilité aux gaz supérieure à celle du bouchon de sorte à contrôler la quantité de gaz circulant à travers le bouchon.

Le ratio entre le volume des canaux et le volume du bouchon, la perméabilité du bouchon et la perméabilité du matériau remplissant le au moins un canal peuvent définir la quantité de gaz circulant à travers le bouchon.

Un canal peut présenter un diamètre compris entre 0,5mm et 6mm.

Le bouchon peut comprendre entre un et quinze canaux.

Le bouchon présente une perméabilité contrôlée à l'oxygène et/ou au dioxyde de carbone.

Le matériau remplissant le au moins un canal est de type élastomère à base silicone réticulable.

Un autre objet de l'invention est un procédé de fabrication d'un bouchon tel que décrit ci-dessus, comprenant les étapes suivantes :
- on réalise au moins un canal dans un bouchon,
- on remplit ledit au moins un canal par un élastomère réticulable sous forme liquide, l'élastomère réticulable étant imperméable aux liquides et présentant une perméabilité à l'oxygène supérieure à celle du bouchon avant réalisationd'au moins un canal et
- on maintient le bouchon dans des conditions de températures et de pression permettant la réticulation de l'élastomère.

Un canal peut être réalisé par perçage mécanique avec une mèche ou par perçage laser ou par jet d'eau à haute pression.

On peut nettoyer chaque canal avant remplissage par une circulation de liquide, d'air comprimé ou de gaz neutre.

On peut préparer l'élastomère à l'aide d'un système de dosage/injection incluant si nécessaire un mélange statique ou dynamique, notamment d'un mélangeur planétaire par un enchaînement d'étapes de mélange et de dégazage.

Pour maintenir le bouchon dans des conditions de températures et de pression permettant la réticulation de l'élastomère, on peut le placer sur une plaque chauffante de sorte qu'une des faces d'extrémité du bouchon soit au contact de la plaque chauffante, afin d'éviter le fluage de l'élastomère.

Pour maintenir le bouchon dans des conditions de température, d'humidité et de pression permettant la réticulation de l'élastomère, on peut le placer dans une étuve pendant une durée prédéterminée, notamment entre un et deux jours.

L'élastomère peut présenter une aptitude alimentaire.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
[Fig 1] illustre les principaux éléments d'un bouchon selon l'invention,
[Fig 2] illustre l'évolution de la quantité d'oxygène cumulée et mesurée au cours du temps en fonction du nombre de canaux, pour des bouchons munis de deux à six canaux de 1mm de diamètre,
[Fig 3] illustre l'évolution de la quantité d'oxygène cumulée et mesurée au cours du temps en fonction du nombre de canaux, pour des bouchons munis de trois et six canaux de 1,5mm de diamètre,
[Fig 4] illustre l'évolution de la quantité d'oxygène cumulée et mesurée au cours du temps en fonction du nombre de canaux, pour des bouchons munis de un à trois canaux de 2mm de diamètre,
[Fig 5] illustre la quantité d'oxygène cumulée et mesurée en fonction du volume de silicone injecté pour différents échantillons à 182 jours, et
[Fig 6] illustre les principales étapes d'un procédé de fabrication selon l'invention.

### Exemples

Afin d'obtenir un bouchon à perméabilité aux gaz déterminée et présentant une faible variabilité de la perméabilité d'un bouchon à l'autre, les inventeurs ont eu l'idée d'élever la perméabilité d'un bouchon présentant une très faible perméabilité (inférieure à 0,84mg d'O2 à 180j) et une très bonne durée de vie jusqu'aux niveaux recherchés sans modifier ses propriétés physiques.

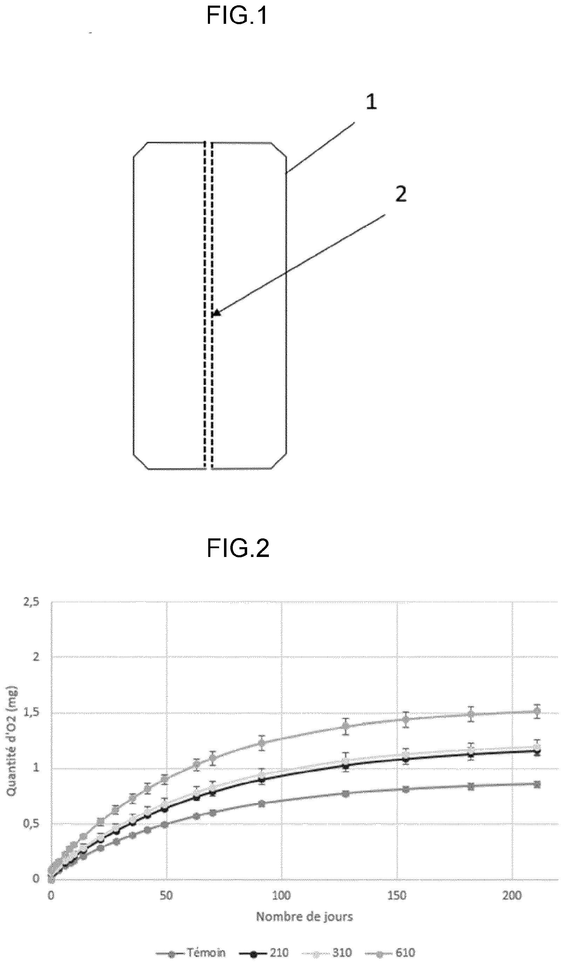

La figure 1 illustre un tel bouchon 1 dans lequel, au moins un canal 2 est ménagé axialement et rempli d'un matériau de perméabilité aux gaz supérieure à celle du bouchon. La figure 1 illustre un bouchon avec un canal. Néanmoins, un plus grand nombre de canaux peut être réalisé.

Dans la description suivante, l'oxygène est pris comme exemple. Néanmoins, d'autres gaz peuvent être considérés comme, par exemple, le dioxyde de carbone dans le cas des vins pétillants. De même, la description suivante est donnée dans le cas d'un élastomère utilisé comme matériau remplissant les canaux. Néanmoins, d'autres matériaux peuvent être employés dès lors qu'ils présentent des propriétés mécaniques compatibles en termes de compressibilité et de tenue mécanique ainsi que de capacité de transition irréversible d'un état liquide à un état solide.

La perméabilité obtenue dépend de la quantité d'élastomère injecté dans des canaux.

Une quantité donnée d'élastomère injecté peut correspondre à des combinaisons de nombres et de diamètres de canaux différents. Les figures 2 à 4 montrent l'évolution de la quantité d'oxygène cumulée et mesurée au cours du temps en fonction du nombre de canaux, pour un diamètre de canal donné ainsi que l'évolution de la quantité d'oxygène cumulée et mesurée au cours du temps pour un échantillon témoin dépourvu de canal.

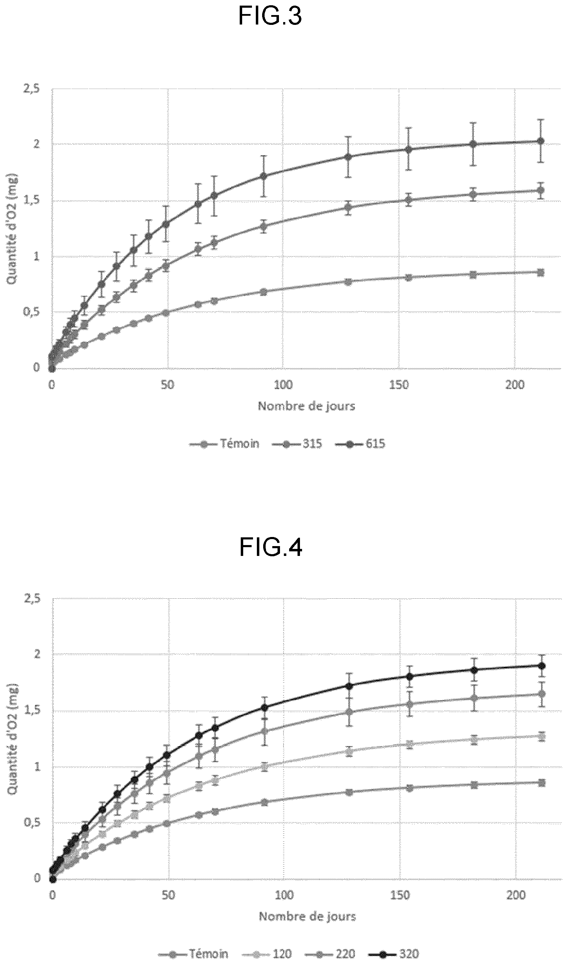

La figure 2 illustre de tels essais pour des bouchons munis de deux à six canaux de 1mm de diamètre, la figure 3 pour des bouchons munis de trois et six canaux de 1,5mm de diamètre et la figure 4 pour des bouchons munis de un à trois canaux de 2mm de diamètre.

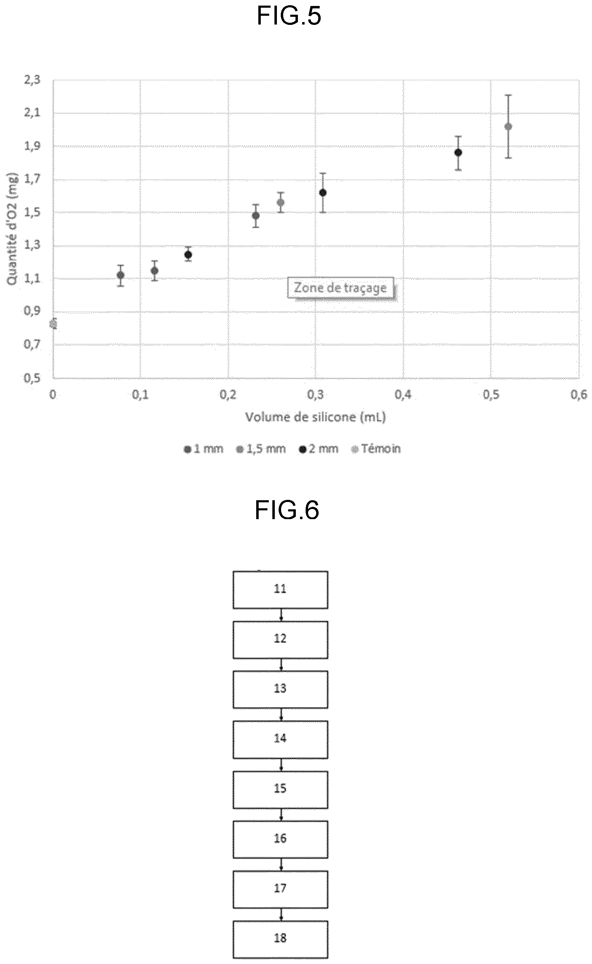

La figure 5 illustre la quantité d'oxygène cumulée et mesurée en fonction du volume de silicone injecté pour chacun des échantillons illustrés sur les figures 2 à 4, à une même date, soit 182j.

Le nombre et la taille des canaux sont alors choisis de sorte à définir un volume de silicone inséré. En fonction de ce volume, on obtient des perméabilités différentes. Néanmoins, la variabilité de la perméabilité demeure restreinte comme illustré.

La figure 6 illustre un procédé de fabrication de bouchon selon l'invention.

Au cours d'une première étape 11, on fabrique un bouchon par mélange de granulé de liège, de liant, typiquement un liant polyuréthane, et d'autres ingrédients tels que des microsphères, ou des cires puis par moulage individuel. La granulométrie du liège et la nature du liant sont choisies afin d'obtenir un bouchon en liège présentant une perméabilité basse, précise et maîtrisée.

Au cours d'une deuxième étape 12, on réalise neuf canaux d'un diamètre prédéfini, notamment de 1mm, dans la direction axiale d'un bouchon usiné par perçage mécanique.

Au cours d'une troisième étape 13, on nettoie chaque canal de sorte à extraire les copeaux et la poussière de liège restants après perçage des canaux. Le nettoyage est réalisé par injection d'air comprimé.

Au cours d'une quatrième étape 14, on prépare un élastomère à base silicone réticulable, imperméable aux liquides, présentant une aptitude au contact alimentaire destiné au remplissage des canaux. Ce matériau est notamment un composé élastomère thermo-réticulable. Un tel matériau est liquide avant réticulation ce qui facilite l'insertion dans les canaux. Les caractéristiques mécaniques de l'élastomère obtenu sont sensiblement proches de celles du liège de sorte que les canaux remplis sont compatibles avec la tenue mécanique attendue lors de l'embouteillage et de la vie d'un bouchon. Un tel composé élastomère est en particulier, un élastomère bi-composant, thermo-réticulable présentant une viscosité de 800 mPa.s. D'autres composés élastomères peuvent être employés, notamment un élastomère mono-composant ou bi-composant, et réticulant au contact de l'humidité ambiante, ou par apport thermique.

Dans ce cas particulier de mise en oeuvre l'élastomère est un composé bi-composant Dans un mode de réalisation spécifique, on ajoute au mélange des deux composés de l'élastomère un pigment afin de teinter le matériau obtenu après réticulation. L'utilisation d'un pigment permet à l'élastomère de présenter la même teinte que le liège afin de masquer les canaux remplis. Le mélange est réalisé dans un mélangeur planétaire puis dégazé.

On remplit ensuite chaque canal avec l'élastomère décrit précédemment. Le remplissage est réalisé sous forme liquide, notamment par l'intermédiaire d'une seringue.

Au cours d'une cinquième étape 15, on réalise une réticulation rapide du composé élastomère. Dans le mode de réalisation décrit ici, la réticulation est thermiquement activée et réalisée sur une plaque chauffante, une des faces d'extrémité du bouchon étant au contact de la plaque chauffante. Pour l'élastomère utilisé ici, la plaque chauffante est portée à 80°C. Cette étape est optionnelle, et permet d'éviter un fluage de l'élastomère lors de la réticulation en profondeur.

Au cours d'une sixième étape 16, on réalise une réticulation en profondeur du composé élastomère. Dans le mode de réalisation décrit ici, la réticulation en profondeur est réalisée en plaçant le bouchon dans une enceinte thermorégulée.

Au cours d'une septième étape 17, on retire l'éventuel excédent d'élastomère des faces du bouchon de sorte à obtenir des faces planes.

Un procédé de fabrication alternatif comprend une première étape 11a au cours de laquelle le bouchon usiné est plus long que le bouchon commercialisé. Les étapes de la deuxième étape 12 à la sixième étape 16 sont similaires à celles présentées ci-dessus. Au cours d'une septième étape 17a différente de la septième étape 17 décrite ci-dessus, on recoupe le bouchon à la longueur d'un bouchon commercialisé. Les deux faces d'extrémité sont retaillées.

Dans tous les cas, les septièmes étapes permettent d'obtenir des bouchons présentant des faces lisses, conformément à ce qui est attendu d'un bouchon de bouteille.

Au cours d'une huitième étape 18, on termine la fabrication du bouchon en réalisant l'étape de satinage.

## Revendications

1. Bouchon en liège pour boucher une bouteille, comprenant deux faces opposées et une surface latérale de sorte à pouvoir être inséré en force dans le col de la bouteille, et dans lequel est ménagé au moins un canal (2) percé entre les deux faces opposées du bouchon (1), de sorte à mettre en communication l'intérieur et l'extérieur de la bouteille, **caractérisé par le fait que** le au moins un canal (2) est rempli d'un matériau imperméable aux liquides, présentant une perméabilité aux gaz supérieure à celle du bouchon (1) de sorte à contrôler la quantité de gaz circulant à travers le bouchon, le bouchon présentant une perméabilité contrôlée à l'oxygène et/ou au dioxyde de carbone, et le matériau remplissant le au moins un canal étant de type élastomère à base silicone réticulable.

2. Bouchon selon la revendication 1, dans lequel le ratio entre le volume des canaux et le volume du bouchon, la perméabilité du bouchon et la perméabilité du matériau remplissant le au moins un canal définissent la quantité de gaz circulant à travers le bouchon.

3. Bouchon selon l'une quelconque des revendications 1 ou 2, dans lequel un canal présente un diamètre compris entre 0,5mm et 6mm.

4. Bouchon selon l'une quelconque des revendications 1 à 3, comprenant entre un et quinze canaux.

5. Procédé de fabrication d'un bouchon en liège selon la revendication
1, comprenant les étapes suivantes :
• on réalise au moins un canal dans un bouchon,
• on remplit ledit au moins un canal par un élastomère réticulable sous forme liquide, l'élastomère réticulable étant imperméable aux liquides et présentant une perméabilité à l'oxygène supérieure à celle du bouchon avant réalisation d'au moins un canal, et
• on maintient le bouchon dans des conditions de températures et de pression permettant la réticulation de l'élastomère.

6. Procédé de fabrication d'un bouchon selon la revendication 5, dans lequel un canal est réalisé par perçage mécanique avec une mèche ou par perçage laser ou par jet d'eau à haute pression.

7. Procédé de fabrication d'un bouchon selon l'une quelconque des revendications 5 ou 6, dans lequel on nettoie chaque canal avant remplissage par une circulation de liquide, d'air comprimé ou de gaz neutre.

8. Procédé de fabrication d'un bouchon selon l'une quelconque des revendications 5 à 7, dans lequel on prépare l'élastomère à l'aide d'un système de dosage/injection incluant si nécessaire un mélange statique ou dynamique.

9. Procédé de fabrication d'un bouchon selon l'une quelconque des revendications 5 à 8, dans lequel pour maintenir le bouchon dans des conditions de températures et de pression permettant la réticulation de l'élastomère, on le place sur une plaque chauffante de sorte qu'une des faces d'extrémité du bouchon soit au contact de la plaque chauffante afin d'éviter le fluage de l'élastomère.

10. Procédé de fabrication d'un bouchon selon l'une quelconque des revendications 5 à 9, dans lequel pour maintenir le bouchon dans des conditions de températures, d'humidité et de pression permettant la réticulation de l'élastomère, on le place dans une étuve pendant une durée prédéterminée, notamment entre un et deux jours.

11. Procédé de fabrication d'un bouchon selon l'une quelconque des revendications 5 à 10, dans lequel l'élastomère présente une aptitude alimentaire.

## Patentansprüche

1. Korkstopfen zum Verschließen einer Flasche, der zwei gegenüberliegende Flächen und eine Seitenoberfläche umfasst, so dass er mit Kraft in den Hals der Flasche eingeführt werden kann, und in dem mindestens ein Kanal (2) ausgebildet ist, der zwischen den beiden gegenüberliegenden Flächen des Stopfens (1) gebohrt ist, um das Innere und das Äußere der Flasche miteinander zu verbinden, **dadurch gekennzeichnet, dass** der mindestens eine Kanal (2) mit einem flüssigkeitsundurchlässigen Material gefüllt ist, das eine höhere Gasdurchlässigkeit als der Stopfen (1) aufweist, um die Menge an Gas, die durch den Stopfen hindurch zirkuliert, zu kontrollieren, wobei der Stopfen eine kontrollierte Durchlässigkeit für Sauerstoff und/oder Kohlendioxid aufweist und das Material, mit dem der mindestens eine Kanal gefüllt ist, vom Typ vernetzbares Elastomer auf Silikonbasis ist.

2. Stopfen nach Anspruch 1, wobei das Verhältnis zwischen dem Volumen der Kanäle und dem Volumen des Stopfens, der Durchlässigkeit des Stopfens und der Durchlässigkeit des Materials, das den mindestens einen Kanal füllt, die Menge an Gas, die durch den Stopfen hindurch zirkuliert, definiert.

3. Stopfen nach einem der Ansprüche 1 oder 2, wobei ein Kanal einen Durchmesser zwischen 0,5 mm und 6 mm aufweist.

4. Stopfen nach einem der Ansprüche 1 bis 3, der zwischen einem und fünfzehn Kanäle umfasst.

5. Verfahren zum Herstellen eines Korkstopfens nach Anspruch 1, umfassend die folgenden Schritte:
- Herstellen von mindestens einem Kanal in einem Stopfen,
- Füllen des mindestens einen Kanals mit einem vernetzbaren Elastomer in flüssiger Form, wobei das vernetzbare Elastomer flüssigkeitsundurchlässig ist und eine Durchlässigkeit für Sauerstoff aufweist, die größer ist als die des Stopfens vor dem Herstellen mindestens eines Kanals ist, und
- Halten des Stopfens unter Temperatur- und Druckbedingungen, die die Vernetzung des Elastomers ermöglichen.

6. Verfahren zum Herstellen eines Stopfens nach Anspruch 5, wobei ein Kanal durch mechanisches Bohren mit einem Bohrer oder durch Laserbohren oder durch einen Hochdruckwasserstrahl hergestellt wird.

7. Verfahren zum Herstellen eines Stopfens nach einem der Ansprüche 5 oder 6, wobei jeder Kanal vor dem Füllen durch eine Zirkulation von Flüssigkeit, Druckluft oder neutralem Gas gereinigt wird.

8. Verfahren zum Herstellen eines Stopfens nach einem der Ansprüche 5 bis 7, wobei das Elastomer mit Hilfe eines Dosier-/Injektionssystems, das gegebenenfalls eine statische oder dynamische Mischung enthält, vorbereitet wird.

9. Verfahren zum Herstellen eines Stopfens nach einem der Ansprüche 5 bis 8, wobei zum Halten des Stopfens unter den Temperatur- und Druckbedingungen, die die Vernetzung des Elastomers ermöglichen, dieser auf eine Heizplatte platziert wird, so dass eine der Endflächen des Stopfens in Kontakt mit der Heizplatte ist, um ein Kriechen des Elastomers zu verhindern.

10. Verfahren zum Herstellen eines Stopfens nach einem der Ansprüche 5 bis 9, wobei zum Halten des Stopfens unter den Temperatur-, Feuchtigkeits- und Druckbedingungen, die eine Vernetzung des Elastomers ermöglichen, dieser für eine vorbestimmte Zeitdauer, insbesondere zwischen einem und zwei Tagen, in einen Brutschrank platziert wird.

11. Verfahren zum Herstellen eines Stopfens nach einem der Ansprüche 5 bis 10, wobei das Elastomer eine Tauglichkeit für die Lebensmittelindustrie aufweist.

## Claims

1. A cork plug for plugging a bottle, comprising two opposite faces and a side surface so as to be able to be inserted by force into the neck of the bottle, and wherein is formed at least one channel (2) pierced between the two faces opposite faces of the plug (1), so as to communicate the interior and exterior of the bottle, **characterised in that** the at least one channel (2) is filled with a material impermeable to liquids, having a permeability to gases greater than that of the plug (1) so as to control the amount of gas circulating through the plug, the plug having a controlled permeability to oxygen and/or carbon dioxide, and the material filling the at least one channel being of the crosslinkable silicone-based elastomer type.

2. The plug according to claim 1, wherein the ratio between the volume of the channels and the volume of the plug, the permeability of the plug and the permeability of the material filling the at least one channel define the amount of gas circulating through the plug.

3. The plug according to any one of claims 1 or 2, wherein a channel has a diameter comprised between 0.5mm and 6mm.

4. The plug according to any one of claims 1 to 3, comprising between one and fifteen channels.

5. A method for manufacturing a cork plug according to claim 1, comprising the following steps:
- at least one channel is formed in a plug,
- said at least one channel is filled with a crosslinkable elastomer in liquid form, the crosslinkable elastomer being impermeable to liquids and having an oxygen permeability greater than that of the plug before forming at least one channel, and
- the plug is maintained under temperature and pressure conditions allowing the crosslinking of the elastomer.

6. The method for manufacturing a plug according to claim 5, wherein a channel is produced by mechanical drilling with a drill bit or by laser drilling or by high pressure water jet.

7. The method for manufacturing a plug according to any one of claims 5 or 6, wherein each channel is cleaned before filling by circulation of liquid, compressed air or neutral gas.

8. The method for manufacturing a plug according to any one of claims 5 to 7, wherein the elastomer is prepared using a dosing/injection system including, if necessary, a static or dynamic mixture.

9. The method for manufacturing a plug according to any one of claims 5 to 8, wherein to maintain the plug under temperature and pressure conditions allowing the crosslinking of the elastomer, it is placed on a heating plate of so that one of the end faces of the plug is in contact with the heating plate in order to avoid creep of the elastomer.

10. The method for manufacturing a plug according to any one of claims 5 to 9, wherein to maintain the plug under conditions of temperature, humidity and pressure allowing the crosslinking of the elastomer, it is placed in an oven for a predetermined period, in particular between one and two days.

11. The method for manufacturing a plug according to any one of claims 5 to 10, wherein the elastomer is food-suitable.
